# EUROPEAN PATENT SPECIFICATION

(11) **EP 3 693 192 B1**
(45) Date of publication and mention of the grant of the patent: **12.10.2022**
(21) Application number: 19155818.8
(22) Date of filing: 06.02.2019
(51) Int. Cl.: B60C 19/00, B60C 19/12

(54) **TYRE WITH A NOISE REDUCTION LAYER**
REIFEN MIT GERÄUSCHDÄMPFERSCHICHT
PNEUMATIQUE AVEC COUCHE DE REDUCTION DE BRUIT

(43) Date of publication of application: 12.08.2020
(73) Proprietor: Bridgestone Europe NV/SA, 1932 Zaventem (BE)
(72) Inventor: Camosi, Luca, 00128 Roma (IT); Arends, Robin, 00128 Roma (IT); Fortunato, Gaetano, 00128 Roma (IT); Emiliani, Marco, 00128 Roma (IT)
(74) Representative: Marchetti, Alessio

(56) References cited:
- DE-A1- 19 806 935
- DE-A1-102015 212 874
- JP-A- H08 132 816
- JP-A- 2009 051 297

## Description

### FIELD

The present invention relates to the reduction of noise in tyres.

### BACKGROUND

Tyres for use on vehicles are operated under a range of different conditions. Under some operating conditions, tyres may generate undesirable levels of noise, which can negatively impact the experience of the driver or passengers.

Existing designs attempt to reduce noise generation in tyres by employing a noise reduction layer inside the tyre cavity. Unfortunately, the use of such layers often negatively impacts the overall performance of the tyre. For example, locating a noise reduction layer adjacent the bead of a tyre can reduce the ease with which a tyre is fitted and removed.

Further problems associated with existing uses of a noise reduction layer include the frequency with which damage is done to the layer due to foreign objections piercing the tread and damaging the layer, or due to contact with the tread itself when a large impact occurs. If the tyre includes a sealant layer to assist in repairing damage to the tread further risks exist. Impacts can cause the noise reduction layer to adhere to the sealant, thus reducing the effectiveness of the noise reduction.

Another problem associated with existing uses of noise reduction layers with sealant layers is that the presence of the noise reduction layer can prejudice the performance of the sealant layer. Impacts or foreign objects piercing the tyre can cause the noise reduction layer, or pieces broken off therefrom, to adhere to the sealant layer. This part of the noise reduction layer can be drawn into the damaged area of the tread and interfere with the sealing action of the sealant layer, reducing or removing the ability of the sealant layer to repair damage.

Stresses experienced by the noise reduction layer during use can also reduce its efficacy. When a rectangular section of material is curved to create an annular noise reduction layer to wrinkle and become detached from the tyre. Tensile forces at the outer radial side can damage the noise reduction layer. Both of these can reduce the performance of the noise reduction layer.

DE19806935 discloses a foam layer placed on the inside of a tire before vulcanization and bonded in place, either chemically or mechanically, during vulcanization.

DE102015212874 discloses a pneumatic vehicle tire wherein for absorbing sound in the pneumatic vehicle tire a foam body is integrated and the foam body has, to reduce its bending stiffness, a plurality of indentations.

JP2009051297 discloses a pneumatic tire, which has an annular sound insulation layer formed of a porous material and extending circumferentially along the tire within a predetermined range on the inner surface of an inner liner between a position of a bead toe at a bead and an inner surface position at a tread ground contact end. JPH08132816A discloses a pneumatic tire 2 fitted to a rim 3, a ring-like cavity H for filling tire air, and a vibration damping sheet 4 arranged on the cavity H face of a tire assembly 1 facing the cavity H. The vibration damping sheet 4 is made of a nonwoven fabric entangled with thermoplastic organic fibers, the apparent specific gravity is 0.02-0.20, and the hysteresis loss (tan δ) at 40 deg.C is 0.05-2.00. The organic fibers having high viscosity and small restoring force at the time of deformation are arranged on the cavity H face.

### SUMMARY

According to the present invention is a tyre as defined in claim 1.

The noise reduction layer may comprise a plurality of cutouts.

The tread portion may be located on an outer radial surface of the tyre and comprise the tread for engaging a road surface. A radial surface may describe the surface perpendicular to the radial direction and extending around the circumference of the tyre. The sidewall portion comprises two sidewalls, which may be axially spaced and extend radially and circumferentially. The bead portion may comprise, for example at the radially inner side of each sidewall, a bead housing which may house a strengthening member for increasing the rigidity of the bead portion.

The noise reduction layers may comprise a plurality of discrete noise reduction layer parts. The parts may be separate and discrete. The noise reduction layers may comprise one, two, three, four or more parts. Where a plurality of parts are provided, the parts may form the noise reduction layers when collectively located in a tyre.

Using a plurality of discrete parts may make it easier to apply the noise reduction layers to the sidewall portion.

Each part of the noise reduction layers may be substantially rectangular when viewed along an axis of the tyre.

The inner radial side of the noise reduction layers may comprise a plurality of cutouts.

Where comments are made herein with regard to cutouts, it is to be understood to also apply equally to a single cutout.

When a plurality of noise reduction layer parts are provided, each part may comprise at least one cutout.

The noise reduction layers may have a rectangular cross-section (e.g. when viewed in a circumferential direction). The noise reduction layers may define a depth in a radial direction. The depth may define a dimension of the installed noise reduction layers in a straight line parallel to the radial direction, or a dimension of the noise reduction layers following the contour of the sidewall. The noise reduction may define a thickness perpendicular to the sidewall portion. The depth and/or thickness may be constant around the circumferential length of the noise reduction layer.

The noise reduction layers may comprise a porous material. The noise reduction layers may comprise a foam.

The noise reduction layers may be annular. The noise reduction layers may be preformed, for example as a continuous annulus. Alternatively, the noise reduction layers may be formed by connecting two ends of an elongated parallelepiped-shaped piece of material - for example using adhesive. An annular noise reduction layer is more easily and readily located within the tyre, as it corresponds to the shape of the sidewall. Forming the annular noise reduction layer out of a parallelepiped-shaped piece of material facilitates a more efficient use of material and minimises wastage.

The noise reduction layers may be configured to reduce the noise of the tyre during use. Noise may be reduced in tyres according to the present disclosure.

The tyre may comprise a sealant layer adjacent the tread portion in the inner cavity of the tyre.

The sealant layer may be located on the inner surface of the tread portion of the tyre.

The sealant layer may extend over an inside of the tread of the tyre.

The sealant layer may be configured to assist in repairing damage to the tread portion of the tyre.

The noise reduction layers may be arranged on the sidewall portion such that an outer radial side of the noise reduction layers is separated from the sealant layer. The noise reduction layers may be arranged on the sidewall portion such that an inner radial side of the noise reduction layers is separated from a radially innermost edge of the bead portion.

An outer radial side of the noise reduction layers may be arranged such that it provides between an overlap of up 15mm or a separation of up to 60mm with the tread portion or sealant layer. An inner radial side of the noise reduction layers may be separated from a radially innermost edge of the bead portion by a distance of greater than 20mm.

An outer radial side of the noise reduction layers may be separated from the tread portion (or tread) or the sealant layer. The outer radial side of the noise reduction layers may overlap the tread portion (or tread) or the sealant layer. The outer radial side of the noise reduction layers may be separated from the tread portion (or tread) or the sealant layer by a distance of up to 50mm, or up to 30mm, or up to 10mm. The outer radial side of the noise reduction layers may overlap the tread portion (or tread) or the sealant layer by a distance of up to 10mm; or up to 5mm.

The outer radial side of the noise reduction layers may be arranged such that it provides: between an overlap of up 15mm or a separation of up to 60mm with the tread portion or sealant layer; between an overlap of up to 10mm or a separation of up to 30mm with the tread portion or sealant layer; between an overlap of up to 5mm and a separation of up to 30mm with the tread portion or sealant layer; between an overlap of up to 5mm and a separation of up to 10mm with the tread portion or sealant layer; or a separation of up to 10mm with the tread portion or sealant layer.

Separating the noise reduction layers from the sealant may prevent the noise reduction layers from interfering with the performance of the sealant layer, especially following deformation of the tyre. Separating the noise reduction layers from the tread portion may prevent the noise reduction layers from getting damaged during deformation of the tyre or puncture of the tread portion. Conversely, having a large separation between the sealant layer and the noise reduction layers can reduce the total volume of noise reduction layers inside the tyre and, accordingly, negatively impact the noise reduction performance of the layer. The selected separation distances and ranges disclosed herein provide an optimal level at which the risk of the noise reduction layers negatively impacting the performance of the sealant layer is minimised, and the noise reduction performance of the noise reduction layers is maximised.

The noise reduction layers may be attached to the tyre - e.g. adjacent the sidewall portion in the inner cavity of the tyre - by adhesive. Where the noise reduction layers overlap a sealant layer, the sealant layer may act as adhesive for a part of the noise reduction layers - e.g. attaching it to the tyre.

An inner radial side of the noise reduction layers may be separated from a radially innermost edge (e.g. the bead toe) of the bead portion. The inner radial side of the noise reduction layers may be separated from the radially innermost edge of the bead portion by a distance of greater than 20mm, or between 20 and 50mm; 25 and 40mm or 27.5 and 35mm. Locating the noise reduction layers close to the bead toe can negatively impact the tyre mounting process. The inclusion of a separation distance negates this issue.

Arranging the noise reduction layers as described herein may allow the layers to be attached a detached using existing tools.

A thickness of the noise reduction layers may be between 5 and 60mm; 10 to 40mm or 15 to 30mm.

The thickness of the noise reduction layers may be chosen to maximise the noise reduction properties of the tyre.

The noise reduction layers defines a thickness in a direction perpendicular to the sidewall portion and the thickness of the noise reduction layers varies in a radial direction of the tyre.

The thickness of the noise reduction layers may vary linearly.

The thickness of the noise reduction layers may be a minimum adjacent an outer edge of the noise reduction layers.

The thickness of the noise reduction layers may increase from a minimum thickness adjacent an outer edge of the noise reduction layers to a maximum thickness in a central region of the noise reduction layers.

A profile of the noise reduction layers may correspond to an inner surface of the sidewall portion. The noise reduction layers may be configured to have a substantially rectangular profile, such that the noise reduction layers provide a substantially vertical surface when the tyre is in an un-deformed state.

The noise reduction layers may be configured to have a substantially triangular profile, such that the greatest thickness is provided at a midpoint (in a radial direction) of the noise reduction layers.

The thickness of the noise reduction layers may be substantially dependent on - e.g. correspond to, or be proportional to - the width of the tyre (e.g. at that radial location). The noise reduction layers may comprise a maximum thickness at a radial location substantially corresponding to the maximum thickness of the tyre. The thickness of the noise reduction layers may decrease (e.g. linearly) from the maximum thickness to a decreased thickness (which may be 0mm) at the innermost and/or outermost edges of the noise reduction layers.

The relative thickness and shape of the noise reduction layers can affect noise reduction performance and also reduce the ease with which the noise reduction layers can adhere to the sealant layer, where present, or be damaged by foreign objects piercing the thread portion.

A distance between a first cutout and second cutout may be between about 30 and 400mm, 100 and 400mm or 200 and 300mm in a circumferential direction. Cutouts may be regularly spaced around the circumference of the noise reduction layers. Cutouts may be spaced by 30 to 400mm circumferentially around the noise reduction layers.

The cutouts may be configured or arranged to reduce internal stresses within the noise reduction layers. The cutouts may be configured or arranged to reduce compression, wrinkling or buckling of the noise reduction surface at the inner radial side of the noise reduction layers.

The cutouts may be defined by the internal profile of the noise reduction layers.

The profile may comprise a castellated, oscillating or concertinaed profile.

The cutouts may extend from an inner radial surface of the noise reduction layers in a radial direction, towards the outer radial surface.

The cutouts may describe any removal of material from a side of the noise reduction layers and as such may include slits, slots or gaps. The cutouts may define a castellated, concertinaed or undulating profile (e.g. of the inner radial surface of the noise reduction layers).

The cutouts may be triangular, rectangular or linear (for example when viewed along the centre axis of the tyre).

The cutout may extend (or the cutouts may extend) in the radial direction by between 50 and 90%, 60 to 80% or 60 to 70% of the depth of the noise reduction layers in a radial direction.

The cutouts may extend through the full thickness of the noise reduction layers.

The inner radius of an arc with a certain depth is smaller than its outer radius. When an arc, or annulus, is formed by deforming a piece of material, this results in tension around the outer circumference and/or compression around the inner circumference. Employing cutouts around the outer radial side of an arc-shaped or annular noise reduction layer may reduce tension, but it may also reduce the amount of noise reduction layer present within a predefined footprint, since the cutouts open up as the noise reduction layer is attached and do not provide any noise reduction properties. Employing cutouts around the inner radial side may reduce or eliminate this compression. This may allow the material to be used as the noise reduction material to be sized according to the outer circumference, thus avoiding tension in the outer radial side. Additionally, in use, the cutouts in the inner radial side may "close up" (either partially, or completely) as the noise reduction layer is arranged in the tyre. This allows more of the noise reduction layer to be present between a given fixed minimum inner and maximum outer radius compared to employing cutouts in the outer circumference.

The cutouts may be arranged such that, when the noise reduction layers are arranged on the sidewall portion in a tyre, they are closed. That is, opposite surfaces defining the cutout may abut when the noise reduction layers are arranged in the tyre. This may be case where the noise reduction layers are formed from a parallelepiped and formed into an annulus.

The outer radial side of the noise reduction layers may comprise a coating.

The coating may be arranged on a side of the noise reduction layers between the noise reduction layers and the tread portion and/or sealant. The coating may be anti-adhesive. The coating may be arranged on a side of the noise reduction layers facing the sealant and/or the tread portion. The coating may extend over the full thickness of the noise reduction layers or only part thereof. The coating may extend radially along the whole or part of the depth of the noise reduction layers.

The coating may be an anti-stick sheet layer; a polar material, paint or coating; a thin layer of silicone/PTFE based foam; a surface treatment of the noise reduction layer; or a high void ratio mesh/fabric.

The coating may be an anti-adhesive layer comprising silicone.

The coating may be configured to reduce the ease with which the noise reduction layers adhere to the sealant. The coating may have an adhesive force on sealant between 0.001 and 10kPa, or between 0.01 and 7 kPa.

The coating may reduce the tendency of the noise reduction layers to adhere to the sealant, which can negatively impact the performance of the sealant. The coating may also protect the noise-reduction layers from damage (regardless of whether a sealant is present).

The coating may comprise a porous material. The coating may have a density of between 10 and 250 kg/m³. The coating may have a thickness of between 0.1 and 10mm; 0.2 and 5mm; or 0.5 and 3mm.

The density of the noise reduction layers may vary through the thickness of the noise reduction layers.

The density of the noise reduction layers adjacent the sidewall portion may be lower than the density of the noise reduction layers adjacent the inner cavity of the tyre.

The noise reduction layers may comprise two discrete density regions - a first region of a first density adjacent the sidewall portion and a second region of a second density which is separated from the sidewall portion by the first region. The first density may be lower than the second density. Alternatively, the density of the noise reduction layers may increase gradually through the thickness of the noise reduction layers from a minimum adjacent the sidewall to a maximum at the cavity-side of the layers. Where the noise reduction layers are of a porous material, the density may be controlled by altering the cell size. Increasing the cell size will reduce the density of the noise reduction layers whereas reducing the cell size will increase the density of the noise reduction layer. Alternatively, alternative materials may be selected, or the composition of the material may be altered in order to control the density.

The noise reduction layers may comprise a first sub-layer, attached to the inside of the sidewall portion, and a second sub-layer, attached to the first sub-layer and extending into the inner cavity of the tyre. The density of the first sub-layer may be lower than the density of the second sub-layer.

The density of the noise reduction layers may be consistent in a circumferential direction.

The elasticity, e.g. Young's Modulus, of the noise reduction layers may vary in a corresponding way to the density of the noise reduction layers.

Employing lower density materials adjacent the sidewall portion may increase cooling properties of the noise reduction layers and improve performance.

Reducing the amount of heat accumulated from the sidewall portion of the tyre during use may minimise the negative impact that heat can have on the performance of the noise reduction layers and any adhesive that might be used to attach it to the sidewall portion.

Additionally, it can be beneficial for the noise reduction layers to minimise stresses at the interface between the noise reduction layers and the sidewall portion, in order to improve service life and performance.

The noise reduction layers may comprise a groove in a side of the noise reduction layers parallel to the sidewall portion. The groove may extend into the thickness of the noise reduction layers.

The groove may extend in a circumferential direction around part, or all, of the noise reduction layers. There may be a plurality of such grooves, each discrete.

The groove may act to reduce the thickness of the noise reduction layers at a specific location. The groove may have a rectangular or triangular profile.

The groove may increase the flexibility at a specific location of the noise reduction layers, thus allowing the noise reduction layers to accommodate deformation of the tyre more easily.

Further according to the invention is a method for manufacturing a tyre according to claim 14.

### DETAILED DESCRIPTION

Figure 1 is a perspective view of part of a tyre with a noise reduction layer and sealant layer;
Figure 2 is a schematic side view of part of a tyre with a noise reduction layer;
Figure 3 is a cross-section of part of a tyre with a noise reduction layer not falling within the literal scope of the claims;
Figure 4 is a cross-section of part of a further tyre with a noise reduction layer not falling within the literal scope of the claims;
Figure 5 is a cross-section of part of a further tyre with a noise reduction layer not falling within the literal scope of the claims;
Figure 6 is a cross-section of part of a further tyre with a noise reduction layer not falling within the literal scope of the claims;
Figure 7 is a cross-section of part of a further tyre with a noise reduction layer;
Figure 8 is a cross-section of part of a further tyre with a noise reduction layer;
Figure 9 is a cross-section of part of a further tyre with a noise reduction layer;
Figure 10 is a cross-section of part of a further tyre with a noise reduction layer not falling within the literal scope of the claims;
Figure 11 is a cross-section of part of a further tyre with a noise reduction layer not falling within the literal scope of the claims;
Figure 12 is a cross-section of part of a further tyre with a noise reduction layer not falling within the literal scope of the claims;
Figure 13 is a cross-section of part of a further tyre with a noise reduction layer;
Figure 14 is a cross-section of part of a further tyre with a noise reduction layer;
Figure 15 is a cross-section of part of a further tyre with a noise reduction layer; and
Figure 16 is a perspective view of part of a tyre with a noise reduction layer and sealant layer;

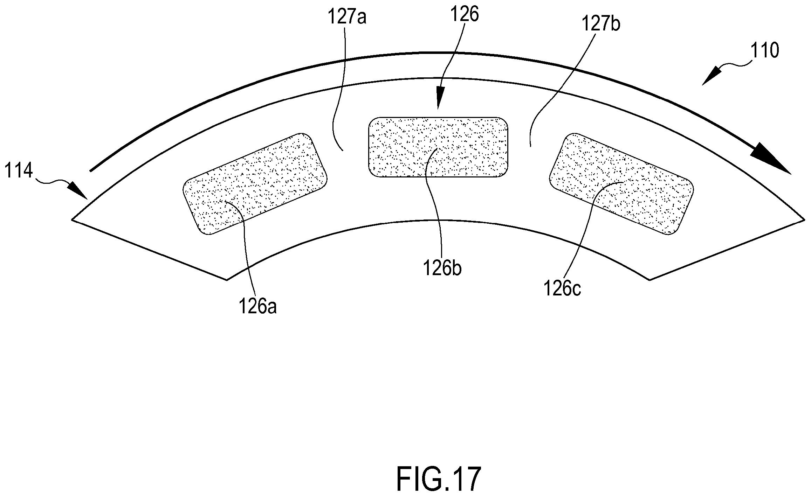

Figure 17 shows a noise reduction layer comprising a plurality of discrete noise reduction layer parts on the sidewall portion of a tyre;
Figure 18 is a graph showing the noise reduction performance of a noise reduction layer on the sidewall portion of a tyre; and
Figure 19 is a further graph showing the noise reduction performance of a noise reduction layer on the sidewall portion of a tyre.

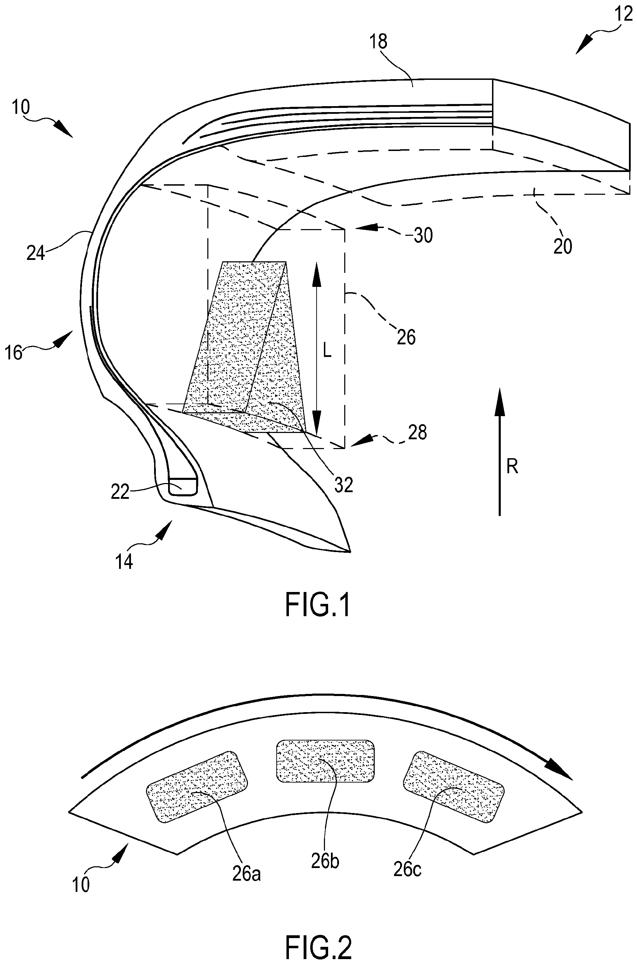

Turning now to Figure 1, a perspective view of a part of a tyre 10 is shown. The tyre comprises a tread portion 12 arranged to engage a road surface. The tread portion 12 is arranged at the outer radial side of the tyre 10. A general radial direction of the tyre is indicated as "R". The tyre 10 also comprises a bead portion 14. The bead portion 14 is arranged at an inner radial side of the tyre 10. The bead portion 14 is arranged to connect the tyre to a hub or wheel (not shown). The tyre 10 also comprises a sidewall portion 16. The sidewall portion 16 extends between, and connects, the tread portion 12 and the bead portion 14. The tread portion 12, bead portion 14 and sidewall portion 16 collectively define an inner cavity of the tyre 10, which may contact pressurised air during use.

The tread portion 12 comprises tread 18 designed to engage and grip a road surface during use. In the tyre 10 of figure 1, a sealant layer 20 is arranged on an inner surface of the tread portion 12. The sealant layer 20 is arranged to cover at least a portion of the, or perhaps the entire, inner surface of the tread 18. The sealant layer 20 is configured to repair damage caused to the tread 18 during use.

The bead portion 14 comprises a strengthening member 22 located inside a cavity 24 formed in the bead portion 14, for example to provide strength and rigidity to the tyre 10.

The sidewall portion 16 comprises a sidewall 24. In Figure 1, the sidewall 24 is formed of a substantially radially-extending rubber wall which connects the tread portion 12 and bead portion 14. In Figure 1, only one sidewall 24 is shown, however, there would be a second sidewall on the other side of the tread portion 12.

The tyre 10 further comprises a noise reduction layer 26 having an inner radial side 28 and an outer radial side 30. Both the inner and outer radial side 28 30 extend circumferentially around the tyre 10 and are perpendicular to a radial direction. The inner radial side 28 has a smaller radius - and hence circumference - than the outer radial side 30.

The noise reduction layer 26 is configured to reduce the amount of noise created by the tyre 10 during use - that is, when rolling over a surface. This is achieved by absorbing vibrations present within the tyre 10.

In the example of Figure 1, the noise reduction layer 26 comprises a foam material.

A cutout 32 is schematically shown in Figure 1, located at the inner radial side 28 of the noise reduction layer 26. The cutout 32 extends from the inner radial side 28 towards the outer radial side 30. The length of the cutout "L" in this radial direction is between 50% and 90% of the depth of the noise reduction layer in this dimension. The cutout 32 extends through the entire thickness of the noise reduction layer 26, (wherein the thickness of the noise reduction layer 26 is the dimension perpendicular to the sidewall 24 or sidewall portion 16).

Although the cutout 32 is depicted as being triangular in shape when the noise reduction layer 26 is installed in a tyre 10, in some cases the cutout 32 may be 'closed', or appear as a narrow slit or cut, when the noise reduction layer 26 is installed in a tyre 10. This might be the case when the noise reduction layer 26 is formed from an elongated parallelepiped and bent into an annulus to attach to the sidewall 24.

Consistent references will be used to refer to corresponding features. Where a feature of a figure is not described in detail it may be considered to be equivalent to that of a preceding Figure.

Figure 2 is a schematic side view of part of a tyre 10 showing an alternative example of a noise reduction layer 26. In Figure 2, the noise reduction layer 26 comprises a plurality of discrete parts 26a 26b 26c which collectively form the noise reduction layer 26. In certain examples, each of the parts 26a 26b 26c may comprise a single, or a plurality of, cutouts.

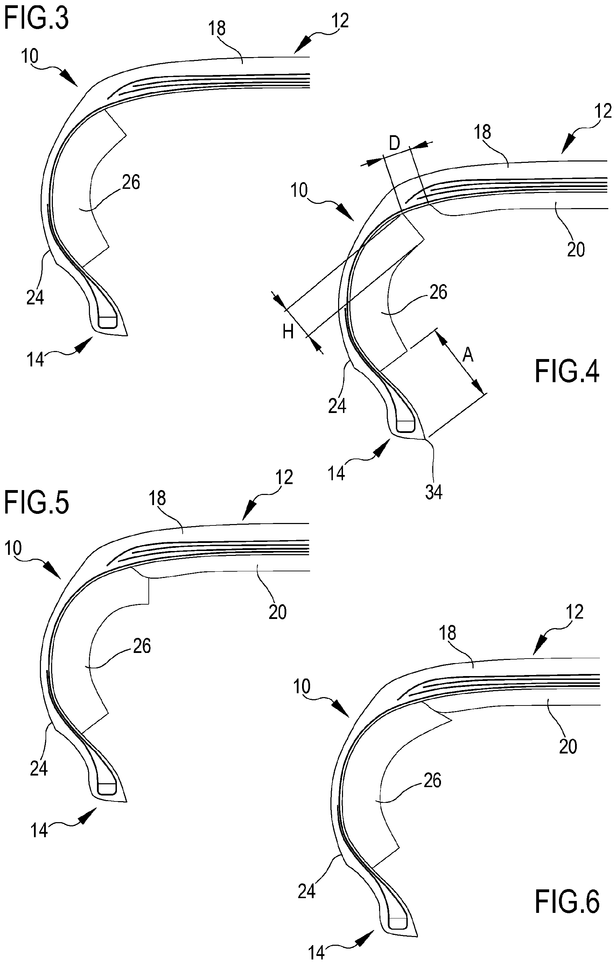

Figure 3 is a cross-section of part of a tyre 10 comprising a noise reduction layer 26 similar to that of Figure 1. The tyre 10 in Figure 3 does not comprise a sealant layer 20.

Figure 4 is a cross-section of part of a tyre 10 comprising a noise reduction layer 26 similar to that of Figure 1. The thickness of the noise reduction layer 26 is labelled as "H". This thickness may be between 5 and 60mm, 10 and 40mm or 15 and 30mm.

In the tyre of Figure 4 the noise reduction layer 26 is separated from the sealant layer 20 by a gap of length "D". This gap length "D" may be up to 10mm, up to 30mm or up to 50mm. In some examples (as shown in Figure 5), the noise reduction layer 26 may overlap the sealant layer 20. Where an overlap is present, the distance of overlap lay be up to 5mm, up to 10mm or up to 15mm. This may be represented as a negative value of "D".

The noise reduction layer 26 of Figure 4 is also separated from the edge 34, or tip, of the bead portion 14 (which may be referred to as the bead toe), for example by a distance "A". This separation distance "A" may be greater than 20mm, or in the range of 20 to 50mm, 25 to 40mm or 27.5 to 35mm.

The noise reduction layer 26 of Figure 5 overlaps the sealant layer 20. As noted above, this overlap may be for a distance of up to 5, 10 or 15mm.

As shown in Figure 6, the outer radial side 30 does not necessarily need to comprise a surface which is perpendicular to the sidewall 24. In some examples, it may follow an adjacent surface - for example that of the sealant layer 20.

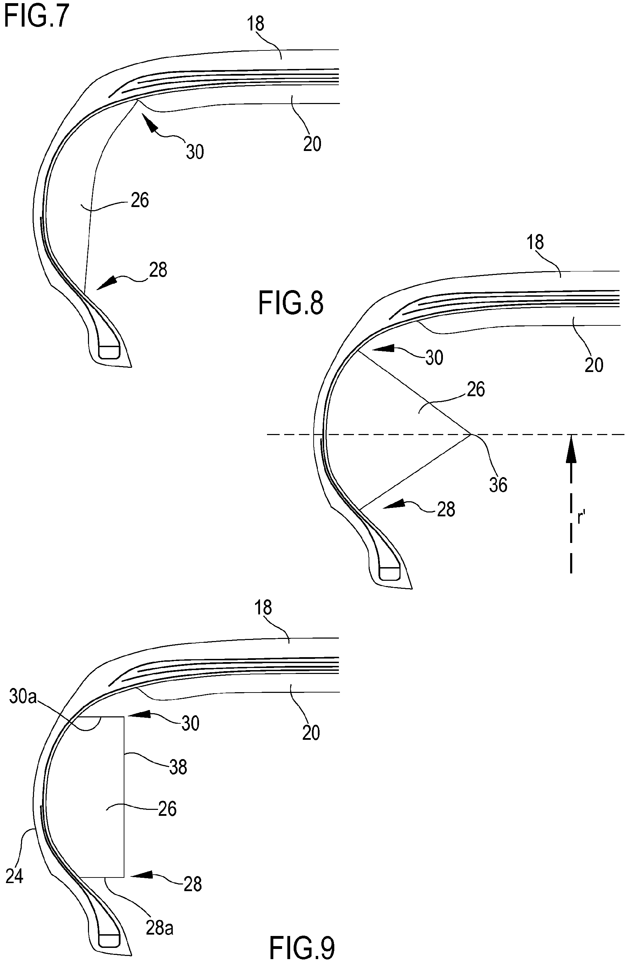

Figures 7 to 8 shown noise reduction layers with a variety of different cross-sectional shapes.

The thickness of the noise reduction layer 26 of Figure 7 gradually tapers off at the inner and outer radial sides 28 30 without any surfaces perpendicular to the radial direction of the tyre.

The noise reduction layer 26 in Figure 8 has a substantially triangular profile. A maximum thickness is provided at a midpoint 36. The location of this maximum thickness of noise reduction layer 26 may correspond to the radial location of the maximum thickness of the tyre: r'. The noise reduction layer 26 of Figure 8 further comprises linearly tapering surfaces extending from the midpoint to the inner and outer radial sides 28 30. The thickness of the noise reduction layer 26 at the inner and outer radial sides 28 30 is zero. In Figure 9 the noise reduction layer 26 comprises a rectangular profile. Each of the inner and outer radial sides 28 30 comprises a radial surface 28a 30a arranged perpendicularly to the radial direction of the tyre 10. The noise reduction layer 26 is arranged to provide an inner surface 38 which is parallel to the radial and circumferential directions of the tyre 10. Due to the curvature of the sidewall 24, the noise reduction layer 26 is thickest near a midpoint of the noise reduction layer 26.

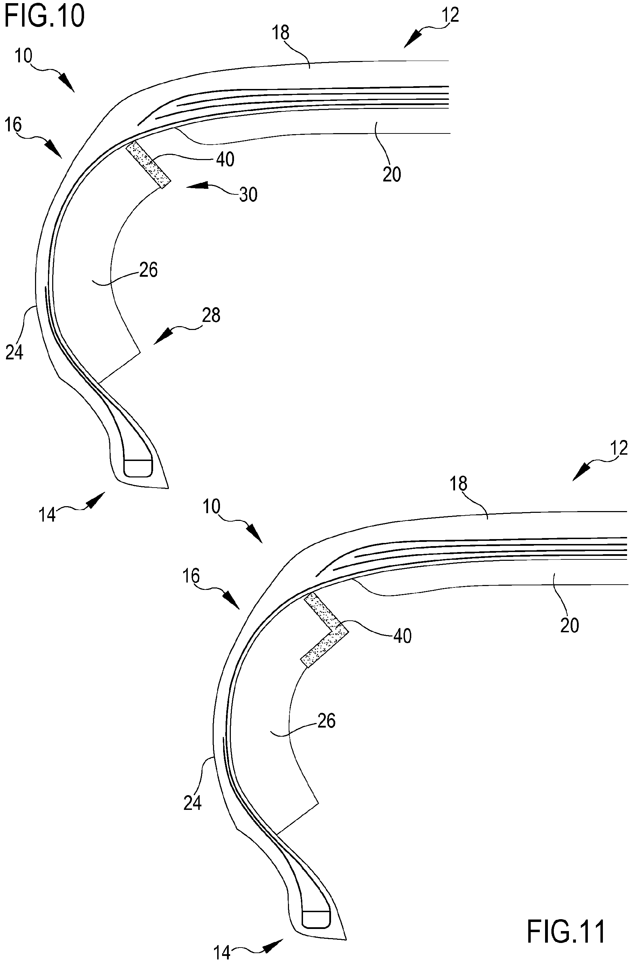

Figure 10 shows a tyre 10 comprising a noise reduction layer 26 which comprises a coating. The coating is a silicone anti-adhesive layer 40. The silicone anti-adhesive layer 40 is arranged at the outer radial side 30 of the noise reduction layer 26 so that it faces the sealant layer 20. The silicone anti-adhesive layer 40 has an adhesive force on the sealant of between 0.01 and 7 kPa. As such, the silicone anti-adhesive layer 40 acts to prevent the noise reduction layer 26 from becoming stuck to the sealant layer 20, which can negatively impact the sealing performance of the sealant layer 20.

In addition to maintaining a the performance of the sealant layer 20, the silicone anti-adhesive layer 40 acts to protect the noise reduction layer 26 from damage, for example due to a foreign body (e.g. a nail) piercing the tread portion 12 in the direction of the noise reduction layer 26. Instead of being pierced or damaged by the foreign body, the noise reduction layer 26 will remain intact due to the coating blocking the foreign body.

In Figure 11, the coating extends over an end surface of the outer radial side 30 which is perpendicular to the sidewall portion 16. In Figure 11, the coating extends over an end surface of the outer radial side 30 and a portion of an inner surface which extends parallel to the sidewall portion 16.

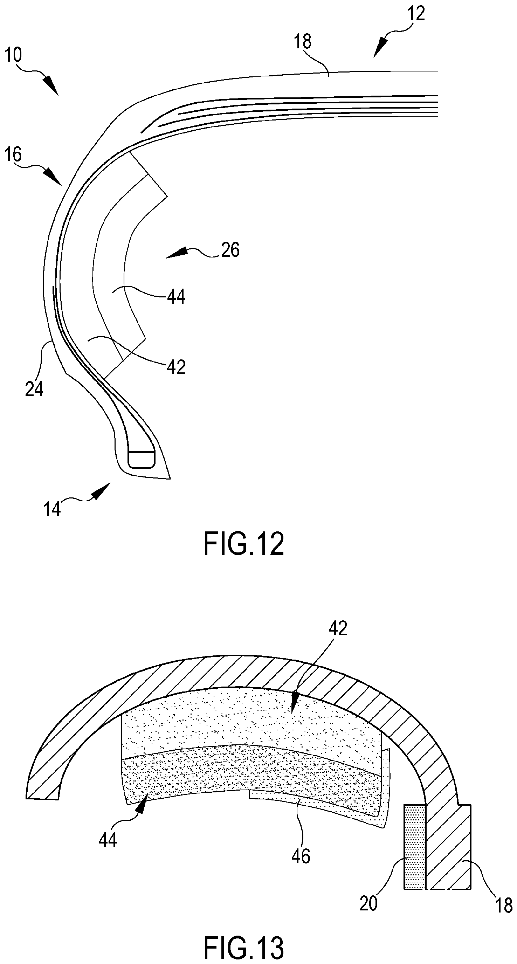

Figure 12 depicts a tyre 10 with a noise reduction layer 26 comprising two discrete density regions. A first region 42 - or sub-layer - is located adjacent and attached to the sidewall 24. The first region 42 has a first density. A second region 44 - or sub-layer - is attached to first region 42. The second region 44 has a second density, which is higher than the first density.

Figure 13 shows a further tyre 10 (rotated clockwise by 90 degrees with respect to Figure 12) comprising a noise reduction layer 26 with two regions 42 44. In Figure 13, a coating 46 is provided over a part of the noise reduction layer 26 adjacent the sealant layer 20.

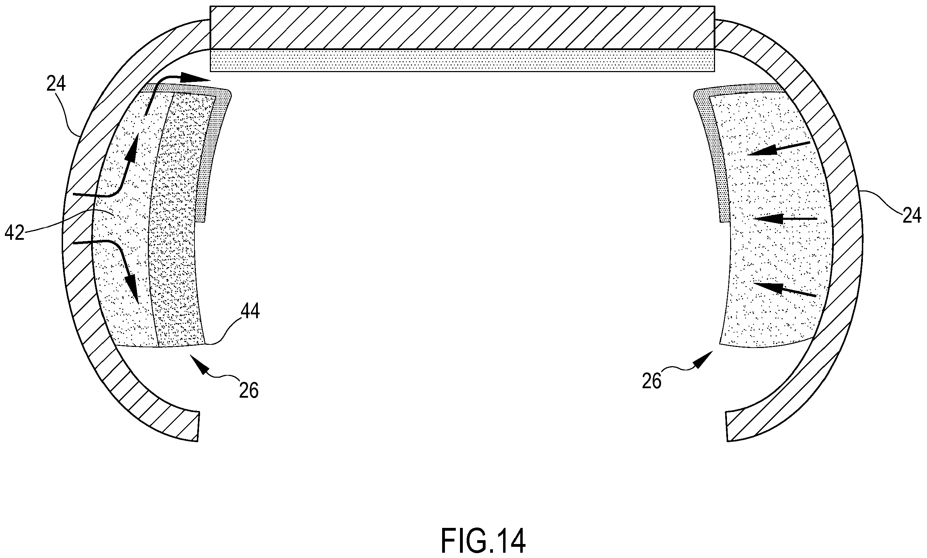

Figure 14 illustrates an effect of having a noise reduction layer 26 with two different density regions 42 44. On the left sidewall 24 of Figure 14, a noise reduction layer 26 comprises two different density regions 42 44, with a lower density region adjacent the sidewall 24. As heat is generated in the sidewall 24 during use due to deformation of the sidewall 24, it is dissipated and flows towards the cavity through the lower density region 42. In comparison, on the right sidewall 24 of Figure 14, the higher density of the noise reduction layer26 adjacent the sidewall results in the generated heat being kept locally, thus reducing performance of the noise reduction layer 26, sidewall 24 and/or any adhesive attaching the noise reduction layer 26 to the sidewall. The flow of heat in both of the above two cases is illustrated by the arrows in Figure 14.

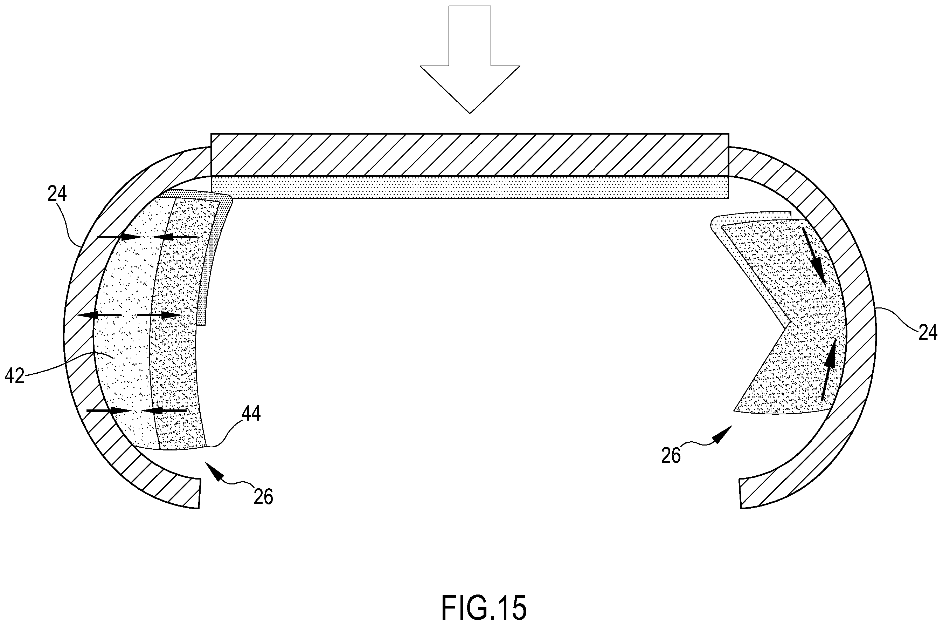

Figure 15 illustrates a further effect of having a noise reduction layer 26 with two different density regions 42 44. On the left sidewall 24 of Figure 15, a noise reduction layer 26 comprises two different density regions 42 44, with a lower density region adjacent the sidewall 24. As the sidewall deforms, this deformation is taken up by, and compensated for, by deformation of the soft, lower-density region 42 adjacent the sidewall 24. In comparison, on the right sidewall 24 of Figure 14, the stiffer, higherdensity of the noise reduction layer 26 adjacent the sidewall results in shear stresses being generated in the noise reduction layer 26 which can negatively impact performance. Loading and the transfer of forces are illustrated in Figure 15 by arrows.

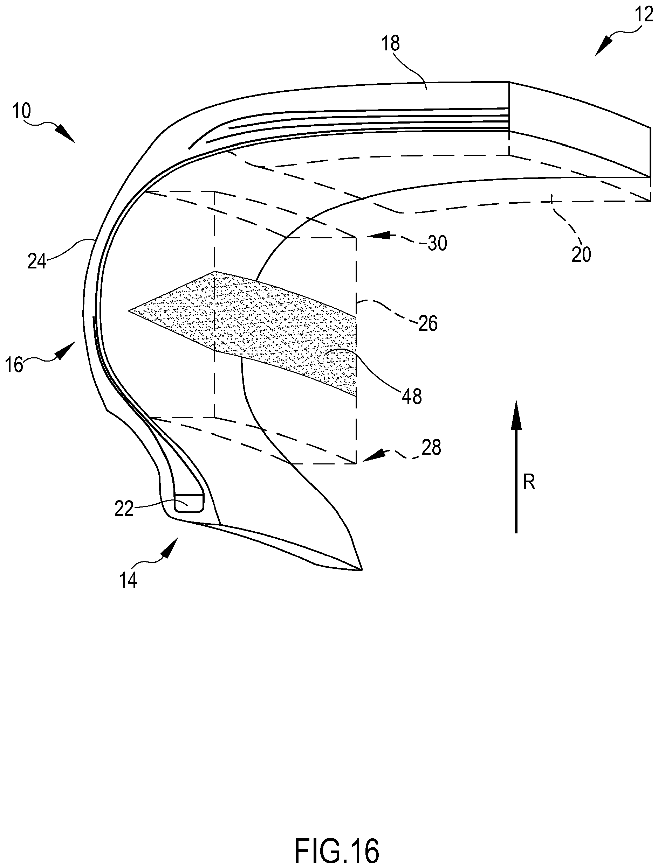

Turning now to Figure 16, a further example of a tyre 10 is shown. In Figure 16, the cutouts 32 are not shown for clarity.

The noise reduction layer 26 of Figure 16 comprises a groove 48. The groove is arranged in a side of the noise reduction layer 26 that is parallel to the sidewall portion 16. The groove 48 therefore extends into the thickness of the noise reduction layer 26. In the example of Figure 16 the groove has a triangular cross-section, although other cross-sections may be used. The groove 48 shown in Figure 16 is a circumferential groove.

The groove 48 may permit the noise reduction layer 26 to flex more easily in a radial direction - for example to more easily accommodate deformation of the sidewall 24 to which it is attached.

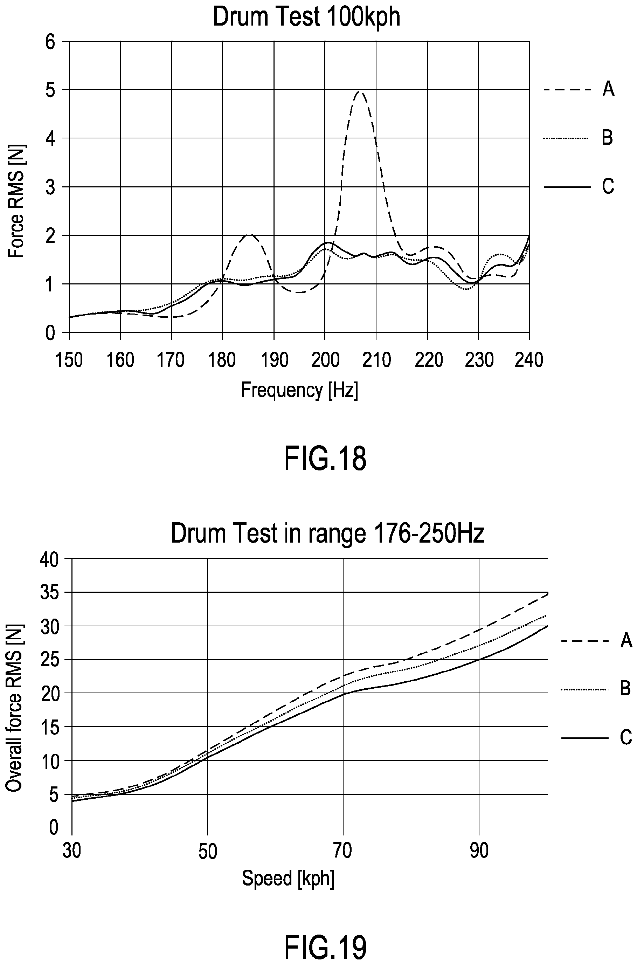

Figure 18 shows a graph which compares the noise reduction performance of a noise reduction layer located on a sidewall portion of the tyre, with a noise reduction layer located on the crown (e.g. tread portion) of the tyre and a tyre without a noise reduction layer. The x-axis represents the frequency of the noise and the y-axis represents the noise intensity.

Line A is a reference line representing a tyre without any noise reduction layer. Line B represents a tyre with a noise reduction layer arranged on the tread portion of the tyre. Line C represents a tyre with a noise reduction layer arranged on the sidewall portion of the tyre.

The tyre size used for this test was 235/60R18 LM001. The crown noise reduction layer was of the following dimensions: 140mm width x 30mm thickness x tire circumferential direction length. The sidewall noise reduction layer was of the following dimensions: 70mm wide x 30mm thick x tire circumferential direction length, and had seven cutouts. The length of the cutouts in tire radial direction is 80% of the depth of the noise reduction layer. The noise reduction layer comprised a polyurethane-based foam material, with an apparent density of 0.025 g/cm³. The noise reduction layer had a compression strength of 1.1 kPa and a tensile strength of 100 kPa with 500% elongation at break. Such a noise reduction layer may be used with any of the examples disclosed herein.

The test included running the tires on a drum with an asphalt-like surface that enhances the noise produced. The value measured is the RMS of the forces in the "vertical" direction z exerted by the tire rolling on a fixed axis hub.

It can be seen that the reference tyre without a noise reduction layer (line A) shows a noise peek at around 185Hz and 208Hz, but the sidewall noise reduction layer reduces this peak.

Figure 19 shows a graph which compares a representation of the overall noise levels for the three scenarios outlined above with respect to Figure 18. The x-axis represents the drum speed and the y-axis is the integrated noise level from 176 to 250 Hz. This graph clearly shows that over the entire speed range shown, the sidewall foam (line C) has a lower total sound level and hence performs better than the other two examples (lines A and B).

The test tyre setups described above with respect to Figures 18 and 19 were also used to test tyre sealant properties.

A commercially available sealant (B-SEAL(TM)) was applied to the tyres opposite the tread contact area. The sealant layer was on average 4mm thick and had a thickness which was equal to the tread contact area plus 10 mm on either side.

20 nails were inserted in each tyre's tread at room temperature (between 20 and 25°C). Each nail was 5mm diameter and 50mm long, with a head which is 1.5mm thick and 12mm diameter. The tyres were run on a steel drum of 2m diameter at 100kph for 10h. A load of 494daN was applied, with an inflation pressure of 250kPa and in a room temperature of 25°C. After the drum test the tires were positioned in a refrigerated cell at -25°C for 24 hours. The nails were removed all together in the successive 240 seconds at room temperature of 20°C. The tyres' punctures were inspected by applying a solution of water and washing-up liquid to verify leakages by visual inspection. Negative judgement is provided by the generation of bubbles.

In the tyre with the noise reduction layer on the tread portion (illustrated with line B in Figures 18 and 19 above), 14% of the nail locations could hold air. In the tyre with the noise reduction layer on the sidewall portion, 100% of the nail locations could hold air.

The present invention has been described above purely by way of example.

Modifications in detail may be made to the present invention within the scope of the claims as appended hereto.

## Claims

1. A tyre (10) comprising:
a tread portion (12);
a bead portion (14); and
a sidewall portion (16) extending between the bead portion (14) and the tread portion (12) wherein the sidewall portion (16) comprises two sidewalls (24); and
wherein the tread portion (12), bead portion (14) and sidewall portion (16) define an inner cavity of the tyre (10);
the tyre (10) further comprising two noise reduction layers (26), one on each of the sidewalls (24), in the inner cavity of the tyre;
**characterised in that** each noise reduction (26) layer defines an inner radial side (28) and an outer radial side (30) and the inner radial side (28) comprises at least one cutout (32), and **in that** the noise reduction layers (26) define a thickness in a direction perpendicular to the sidewall portion (16) and the thickness of the noise reduction layers (26) varies in a radial direction of the tyre (10).

2. The tyre (10) of claim 1, wherein the noise reduction layers (26) comprise a plurality of discrete noise reduction layer parts (26a, 26b, 26c).

3. The tyre (10) according to claim 1 or claim 2, wherein the tyre (10) comprises a sealant layer (20) adjacent the tread portion (12) in the inner cavity of the tyre (10).

4. The tyre (10) according to claim 3, wherein the noise reduction layers (26) are arranged on the sidewall portion (16) such that the outer radial side (30) of the noise reduction layers (26) is separated from the sealant layer (20) and the inner radial side (28) of the noise reduction layers (26) is separated from a radially innermost edge of the bead portion (14).

5. The tyre (10) according to claim 3, wherein the outer radial side (30) of the noise reduction layers (26) is arranged such that it provides between an overlap of up to 15mm or a separation of up to 60mm with the sealant layer (20) and the inner radial side (28) of the noise reduction layers (26) is separated from a radially innermost edge of the bead portion (14) by a distance of greater than 20mm.

6. The tyre (10) according to any of the preceding claims, wherein the thickness of the noise reduction layers (26) is a minimum adjacent an outer edge of the noise reduction layers (26).

7. The tyre (10) of any of the preceding claims, wherein the inner radial side (28) of the noise reduction layers comprises a plurality of cutouts (32) and a distance between a first cutout (32) and a second cutout (32) is between about 30 and 400mm in a circumferential direction.

8. The tyre (10) according to any of the preceding claims, wherein each cutout (32) extends in the radial direction by between 50 and 90% of the depth of the noise reduction layer (26) in a radial direction.

9. The tyre (10) according to any of the preceding claims, wherein the outer radial side (30) of the noise reduction layers (26) comprises a coating.

10. The tyre (10) according to claim 9, wherein the coating is an anti-adhesive layer comprising silicone.

11. The tyre (10) according to any of the preceding claims, wherein the density of the noise reduction layers (26) varies through the thickness of the noise reduction layers (26).

12. The tyre (10) according to claim 11, wherein the density of the noise reduction layers (26) adjacent the sidewall portion (16) is lower than the density of the noise reduction layers (26) adjacent the inner cavity of the tyre (10).

13. The tyre (10) according to any of the preceding claims, wherein the noise reduction layers (26) comprise a groove (48) in a side of the noise reduction layers (26) parallel to the sidewall (24) portion, wherein the groove (48) extends into the thickness of the noise reduction layers (26).

14. A method for manufacturing a tyre (10), comprising:
providing two noise reduction layers, each comprising a plurality of cutouts; and arranging a noise reduction layer on each of two sidewalls (24) of the sidewall portion (16) of a tyre (10), such that the plurality of cutouts (32) are arranged on an inner radial side (28) of the noise reduction layers (26),
wherein the noise reduction layers (26) define a thickness in a direction perpendicular to the sidewall portion (16) and the thickness of the noise reduction layers (26) varies in a radial direction of the tyre (10).

## Patentansprüche

1. Reifen (10), umfassend:
einen Laufflächenabschnitt (12);
einen Wulstabschnitt (14); und
einen Seitenwandabschnitt (16), der sich zwischen dem Wulstabschnitt (14) und dem Laufflächenabschnitt (12) erstreckt, wobei der Seitenwandabschnitt (16) zwei Seitenwände (24) umfasst; und
wobei der Laufflächenabschnitt (12), der Wulstabschnitt (14) und Seitenwandabschnitt (16) einen inneren Hohlraum des Reifens (10) definieren;
wobei der Reifen (10) ferner zwei Geräuschreduktionsschichten (26) umfasst, eine auf jeder der Seitenwände (24), im inneren Hohlraum des Reifens;
**dadurch gekennzeichnet, dass**
jede Geräuschreduktionsschicht (26) eine innere radiale Seite (28) und eine äußere radiale Seite (30) definiert und die innere radiale Seite (28) mindestens eine Aussparung (32) umfasst,
und **dadurch, dass** die Geräuschreduktionsschichten (26) eine Dicke in einer Richtung senkrecht zum Seitenwandabschnitt (16) definiert und die Dicke der Geräuschreduktionsschichten (26) in einer radialen Richtung des Reifens (10) variiert.

2. Reifen (10) nach Anspruch 1, wobei die Geräuschreduktionsschichten (26) eine Vielzahl von diskreten Geräuschreduktionsschichtteilen (26a, 26b, 26c) umfassen.

3. Reifen (10) nach Anspruch 1 oder Anspruch 2, wobei der Reifen (10) eine Dichtmittelschicht (20) benachbart zu dem Laufflächenabschnitt (12) im inneren Hohlraum des Reifens (10) umfasst.

4. Reifen (10) nach Anspruch 3, wobei die Geräuschreduktionsschichten (26) auf dem Seitenwandabschnitt (16) derart angeordnet sind, dass die äußere radiale Seite (30) der Geräuschreduktionsschichten (26) von der Dichtmittelschicht (20) getrennt ist und die innere radiale Seite (28) der Geräuschreduktionsschichten (26) von einem radial innersten Rand des Wulstabschnitts (14) getrennt ist.

5. Reifen (10) nach Anspruch 3, wobei die äußere radiale Seite (30) der Geräuschreduktionsschichten (26) derart angeordnet ist, dass sie zwischen einer Überlappung von bis 15 mm oder einer Trennung von bis zu 60 mm mit der Dichtmittelschicht (20) bereitstellt und die innere radiale Seite (28) der Geräuschreduktionsschichten (26) von einem radial innersten Rand des Wulstabschnitts (14) um einen Abstand von mehr als 20 mm getrennt ist.

6. Reifen (10) nach einem der vorstehenden Ansprüche, wobei die Dicke der Geräuschreduktionsschichten (26) benachbart zu einem Außenrand der Geräuschreduktionsschichten (26) ein Minimum ist.

7. Reifen (10) nach einem der vorstehenden Ansprüche, wobei die innere radiale Seite (28) der Geräuschreduktionsschichten eine Vielzahl von Ausnehmungen (32) umfasst und ein Abstand zwischen einer ersten Ausnehmung (32) und einer zweiten Ausnehmung (32) in einer Umfangsrichtung zwischen etwa 30 und 400 mm beträgt.

8. Reifen (10) nach einem der vorstehenden Ansprüche, wobei sich jede Ausnehmung (32) in radialer Richtung um zwischen 50 und 90 % der Tiefe der Geräuschreduktionsschicht (26) in einer radialen Richtung erstreckt.

9. Der Reifen (10) nach einem der vorstehenden Ansprüche, wobei die radiale äußere Seite (30) der Geräuschreduktionsschichten (26) eine Beschichtung umfasst.

10. Reifen (10) nach Anspruch 9, wobei die Beschichtung eine Antihaftschicht ist, die Silikon umfasst.

11. Reifen (10) nach einem der vorstehenden Ansprüche, wobei die Dichte der Geräuschreduktionsschichten (26) über die Dicke der Geräuschreduktionsschichten (26) hinweg variiert.

12. Reifen (10) nach Anspruch 11, wobei die Dichte der Geräuschreduktionsschichten (26) benachbart zu dem Seitenwandabschnitt (16) niedriger ist als die Dichte der Geräuschreduktionsschichten (26) benachbart zu dem inneren Hohlraum des Reifens (10).

13. Reifen (10) nach einem der vorstehenden Ansprüche, wobei die Geräuschreduktionsschichten (26) eine Nut (48) in einer Seite der Geräuschreduktionsschichten (26) parallel zum Seitenwandabschnitt (24) umfassen, wobei sich die Nut (48) in die Dicke der Geräuschreduktionsschichten (26) erstreckt.

14. Verfahren zur Herstellung eines Reifens (10), umfassend:
Bereitstellen von zwei Geräuschreduktionsschichten, die jeweils eine Vielzahl von Ausnehmungen umfassen; und Anordnen einer Geräuschreduktionsschicht auf jeder von zwei Seitenwänden (24) des Seitenwandabschnitts (16) eines Reifens (10), sodass die Vielzahl von Ausnehmungen (32) auf einer inneren radialen Seite (28) der Geräuschreduktionsschichten (26) angeordnet sind,
wobei die Geräuschreduktionsschichten (26) eine Dicke in einer Richtung senkrecht zum Seitenwandabschnitt (16) definiert und die Dicke der Geräuschreduktionsschichten (26) in einer radialen Richtung des Reifens (10) variiert.

## Revendications

1. Pneu (10) comprenant :
une portion de bande de roulement (12) ;
une portion de talon (14) ; et
une portion de flanc (16) s'étendant entre la portion de talon (14) et la portion de bande de roulement (12) dans lequel la portion de flanc (16) comprend deux flancs (24) ; et
dans lequel la portion de bande de roulement (12), la portion de talon (14) et la portion de paroi latérale (16) définissent une cavité interne du pneu (10) ;
le pneu (10) comprenant en outre deux couches de réduction de bruit (26), une sur chacun des flancs (24), dans la cavité interne du pneu ;
**caractérisé en ce que**
chaque couche de réduction de bruit (26) définit un côté radial interne (28) et un côté radial externe (30) et le côté radial interne (28) comprend au moins une découpe (32),
et **en ce que** les couches de réduction de bruit (26) définissent une épaisseur dans une direction perpendiculaire à la portion de flanc (16) et l'épaisseur des couches de réduction de bruit (26) varie dans une direction radiale du pneu (10).

2. Pneu (10) selon la revendication 1, dans lequel les couches de réduction de bruit (26) comprennent une pluralité de parties distinctes de couche de réduction de bruit (26a, 26b, 26c).

3. Pneu (10) selon la revendication 1 ou la revendication 2, dans lequel le pneu (10) comprend une couche d'étanchéité (20) adjacente à la portion de bande de roulement (12) dans la cavité interne du pneu (10).

4. Pneu (10) selon la revendication 3, dans lequel les couches de réduction de bruit (26) sont agencées sur la portion de flanc (16) de telle sorte que le côté radial externe (30) des couches de réduction de bruit (26) est séparé de la couche d'étanchéité (20) et le côté radial interne (28) des couches de réduction de bruit (26) est séparé d'un bord le plus radialement interne de la portion de talon (14).

5. Pneu (10) selon la revendication 3, dans lequel le côté radial externe (30) des couches de réduction de bruit (26) est agencé de telle sorte qu'il fournit entre un chevauchement allant jusqu'à 15 mm ou une séparation allant jusqu'à 60 mm avec la couche d'étanchéité (20) et le côté radial interne (28) des couches de réduction de bruit (26) est séparé d'un bord le plus radialement interne de la portion de talon (14) d'une distance supérieure à 20 mm.

6. Pneu (10) selon l'une quelconque des revendications précédentes, dans lequel l'épaisseur des couches de réduction de bruit (26) est un minimum en position adjacente à un bord externe des couches de réduction de bruit (26).

7. Pneu (10) selon l'une quelconque des revendications précédentes, dans lequel le côté radial interne (28) des couches de réduction de bruit comprend une pluralité de découpes (32) et une distance entre une première découpe (32) et une deuxième découpe (32) est comprise entre environ 30 et 400 mm dans une direction circonférentielle.

8. Pneu (10) selon l'une quelconque des revendications précédentes, dans lequel chaque découpe (32) s'étend dans la direction radiale sur une profondeur comprise entre 50 et 90 % de la profondeur de la couche de réduction de bruit (26) dans une direction radiale.

9. Pneu (10) selon l'une quelconque des revendications précédentes, dans lequel le côté radial externe (30) des couches de réduction de bruit (26) comprend un revêtement.

10. Pneu (10) selon la revendication 9, dans lequel le revêtement est une couche antiadhésive comprenant de la silicone.

11. Pneu (10) selon l'une quelconque des revendications précédentes, dans lequel la masse volumique des couches de réduction de bruit (26) varie sur l'épaisseur des couches de réduction de bruit (26).

12. Pneu (10) selon la revendication 11, dans lequel la masse volumique des couches de réduction de bruit (26) adjacente à la portion de flanc (16) est inférieure à la masse volumique des couches de réduction de bruit (26) adjacente à la cavité interne du pneu (10).

13. Pneu (10) selon l'une quelconque des revendications précédentes, dans lequel les couches de réduction de bruit (26) comprennent une rainure (48) dans un côté des couches de réduction de bruit (26) parallèle à la portion de flanc (24), dans lequel la rainure (48) s'étend dans l'épaisseur des couches de réduction de bruit (26).

14. Procédé pour la fabrication d'un pneu (10), comprenant :
la fourniture de deux couches de réduction de bruit, comprenant chacune une pluralité de découpes ; et l'agencement d'une couche de réduction de bruit sur chacun des deux flancs (24) de la portion de flanc (16) d'un pneu (10), de telle sorte que la pluralité de découpes (32) sont agencées sur un côté radial interne (28) des couches de réduction de bruit (26),
dans lequel les couches de réduction de bruit (26) définissent une épaisseur dans une direction perpendiculaire à la portion de flanc (16) et l'épaisseur des couches de réduction de bruit (26) varie dans une direction radiale du pneu (10).
